# EUROPÄISCHE PATENTSCHRIFT

(11) **EP 3 205 919 B1**
(45) Veröffentlichungstag und Bekanntmachung des Hinweises auf die Patenterteilung: **30.10.2019**
(21) Anmeldenummer: 17155546.9
(22) Anmeldetag: 10.02.2017
(51) Int. Cl.: F16L 23/08, F16L 23/04, F16L 33/04

(54) **SPANNSCHELLE**
TENSIONING CLAMP
COLLIER DE SERRAGE

(30) Priorität: 12.02.2016 DE 102016102517
(43) Veröffentlichungstag der Anmeldung: 16.08.2017
(73) Patentinhaber: NORMA Germany GmbH, 63477 Maintal (DE)
(72) Erfinder: Cottle, Ben, Berkshire, RG14 6RU (GB); Baudoin, Manuel, Berkshire, RG14 7QD (GB); Franke, Christian, 38442 Wolfsburg (DE)
(74) Vertreter: Patentanwälte Olbricht Buchhold Keulertz

(56) Entgegenhaltungen:
- EP-A1- 2 674 656
- WO-A2-2008/102116
- DE-A1- 19 546 077
- DE-B4-102009 039 862
- DE-U1- 8 808 329

## Beschreibung

Die vorliegende Erfindung betrifft eine Spannschelle mit einem Schellenband, wobei das Spannband insbesondere einen V-förmigen Querschnitt aufweist, wobei das Schellenband an einem ersten Ende einen ersten Spannkopf und an einem zweiten Ende einen gegenüberliegenden zweiten Spannkopf aufweist, wobei ein Spannelement vorgesehen ist, mit dem die Spannköpfe zueinander verspannbar sind und wobei ein Clipelement am ersten Spannkopf angeordnet ist, der wenigstens eine Rastanformung aufweist, an der der zweite Spannkopf verrastbar ist.

Die WO 2008/102116 A2 offenbart eine Spannschelle mit einem Schellenband und mit einem Schellenschloss, wobei das Schellenschloss aus zwei sich gegenüberliegend angeordneten Spannköpfen aufgebaut ist. Die beiden Spannköpfe können mit einem Schraubelement so miteinander verbunden werden, dass bei einem Anziehen des Schraubelements der Durchmesser des Schellenbandes verringert wird. Werden derartige Spannschellen an einem Bauteil angeordnet, beispielsweise an einem Rohr, einem Schlauch oder zwei zu verbindenden Bauteilen mit einem jeweiligen Flansch, so dienen Clipelemente dazu, dass die Spannschelle am Bauteil vorpositioniert werden kann, um beispielsweise erst in einem weiteren Arbeitsschritt das Schraubelement festzuziehen. Das Clipelement ist dafür an einem ersten Spannkopf angeordnet und kann mit einer Rastfahne verrasten, wofür das Clipelement Rastanformungen aufweist. Das Clipelement ist zur Positionierung am Spannkopf mit einem Aufnahmeende ausgebildet, welches den Spannkopf von außen umgreift und durch eine mit dem Schraubelement zusammenwirkenden Mutter gehalten wird.

Aufgabe der Erfindung ist die Weiterbildung einer Spannschelle mit einer vereinfachten Herstellung des Clipelements am Spannkopf.

Diese Aufgabe wird von einer Spannschelle gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung sieht vor, dass das Clipelement aus einem Federstahlband mittels eines Stanz-Biege-Verfahrens hergestellt ist. Somit weist das Clipelement einen ebenen oder leicht gekrümmten Federblechkörper auf, an dem die Rastanformung ein- oder mehrfach ausgebildet ist. Das Stanz-Biege-Verfahren ermöglicht dabei eine sehr einfache und damit kostengünstige Herstellung des Clipelements und gegenüber beispielsweise einem reinen Biegeverfahren eine variablere Gestaltung.

Das Clipelement ist mittels eines Fügeverfahrens am ersten Spannkopf befestigt, so dass dieses dauerhaft mit dem ersten Spannkopf verbunden ist. Das Fügeverfahren ist erfindungsgemäß ein Buckelschweißverfahren. Das Buckelschweißen eignet sich besonders für die Verschweißung von Blechelementen und dergleichen. Dabei weist wenigstens einer der beiden Fügepartner einen Schweißbuckel auf, so dass das Buckelschweißen eine besondere Form des Widerstandsschweißens bildet, die sehr einfach ausgeführt werden kann. Damit ergibt sich der Vorteil einer einfachen und sicheren Anordnung des Clipelements am Spannkopf, ohne dass dieses als Einzelteil ausgeführt und gehalten werden muss. Bereits bei der Fertigung der Spannköpfe kann dabei das Clipelement an den ersten Schellenflansch angeschweißt werden, so dass eine Handhabung des Clipelements als Einzelteil nicht mehr notwendig ist.

Ein besonderer Vorteil wird erreicht, wenn am Clipelement wenigstens ein Schweißbuckel ausgebildet ist, mit dem das Buckelschweißen ausgeführt wird. Insbesondere ist es von Vorteil, wenn am Clipelement ein und/oder zwei und/oder drei und/oder vier Schweißbuckel ausgebildet sind. Das Verschweißen des Clipelements mit dem Spannkopf erfolgt dabei insbesondere durch das Ansetzen von zwei Elektroden, so dass der Schweißkontakt zwischen dem Clipelement und dem Spannkopf über die einzelnen Schweißbuckel erfolgt, an denen auch die Schweißstellen ausgebildet werden. Insbesondere können bei mehreren dicht beieinander liegenden Schweißbuckeln die mehreren Schweißpunkte zwischen dem Clipelement und dem Spannkopf mit einem einzigen Elektrodenpaar hergestellt werden.

Mit weiterem Vorteil weist der erste Spannkopf eine angeformte Aufnahmefahne auf, die sich über ein freies Ende des Spannkopfes hinweg nach außen erstreckt und an der das Clipelement mittels des Buckelschweißens aufgenommen ist. Die Aufnahmefahne bildet ein beispielsweise einteilig und materialeinheitlich am Spannkopf ausgebildetes ebenes Blechstück, so dass das ebene Blechstück mit einem entsprechenden Abschnitt des Clipelements in Überdeckung gebracht werden kann, der eine Schweißfahne bildet. Anschließend können die Schweißelektroden angesetzt und die Schweißverbindung mittels Buckelschweißens hergestellt werden. Die Spannköpfe können sich radial nach außen vom ringförmigen Schellenband weg erstrecken, wobei vorzugsweise die Aufnahmefahne ebenfalls radial über dem Spannkopf hinausragt. Somit besteht die Möglichkeit, das Clipelement am Kopfende der Spannköpfe anzuordnen.

Gemäß einer weiteren vorteilhaften Ausführungsform der Spannschelle weist das Clipelement eine erste Rastanformung und eine zweite Rastanformung auf, wobei die beiden Rastanformungen jeweils mittels einer Ausklinkung aus einem flächigen Bereich des Clipelements gebildet sind. Der flächige Bereich kann dabei einen Abschnitt des Federblechkörpers des Clipelements bilden. Durch die Ausgestaltung der Rastanformungen mittels Ausklinkungen ergibt sich eine einfache Herstellungsvariante beispielsweise mittels Stanz-Biege-Verfahren. Dabei können die Ausklinkungen eine geschlossene Innenkontur aufweisen, um die Steifigkeit des Clipelements nicht erheblich herabzusetzen.

Auch ist es von Vorteil, wenn das Clipelement am freien, der Buckelschweißverbindung gegenüberliegenden Ende eine aufgebogene Fahne aufweist. An dieser Fahne kann das Clipelement beispielsweise mit einem Finger hochgezogen werden, um die Rastanformung des Clipelements von der Rastfahne am gegenüberliegenden Spannkopf zu lösen, beispielsweise wenn die vormontierte Spannschelle noch einmal vom Bauteil entnommen werden muss. Die aufgebogene Fahne ist dabei vorzugsweise in einer gemeinsamen Biegeoperation mit der zweiten Rastanformung ausgebildet und/oder es ist vorgesehen, dass sich die aufgebogene Fahne mit der zweiten Rastanformung in einer gemeinsamen Ebene erstreckt, die unter einem Winkel zur Ebene des Clipelements angestellt ist.

Die Rastanformungen weisen ebenso wie die Fahne eine Anschrägung gegenüber der Ebene des Federblechkörpers des Clipelements auf, wobei die Schrägung so ausgebildet ist, dass die Rastfahne am gegenüberliegenden Spannkopf formschließend gegen die Rastanformung anliegen kann. Wenn die Spannköpfe mit einem Spannelement aufeinander zu gezogen werden, kann die Rastfahne an den Rastanformungen des Clipelements so entlanggleiten. Das Clipelement ist dabei so gegen die Rastfahne radial nach innen vorgespannt, dass die Rastanformungen selbsttätig mit der Rastfahne in Wechselwirkung treten.

Das Ende des Clipelements zur Ausbildung der Buckelschweißverbindung weist vorzugsweise eine abgewinkelte Schweißfahne auf, in der der wenigstens eine Schweißbuckel eingebracht ist, mit der die Buckelschweißverbindung hergestellt ist. Die Abwinkelung der Schweißfahne kann beispielsweise 90° oder etwas weniger betragen, so dass eine radial nach außen stehende Aufnahmefahne am ersten Spannkopf mit der abgewinkelten Schweißfahne des Clipelements parallel zur Anlage gebracht werden kann. Dann erstreckt sich der Abschnitt des Federblechkörpers des Clipelements quer über den gegenüberliegenden, zweiten Spannkopf mit der angeformten Rastfahne, gegen die das Clipelement leicht vorgespannt ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Detailansicht einer Spannschelle im Bereich des Schellenschlosses mit einem erfindungsgemäß angeordneten Clipelement,
- Fig. 2: eine Seitenansicht des Clipelements mit Merkmalen der Erfindung und
- Fig. 3: eine perspektivische Ansicht des Clipelements.

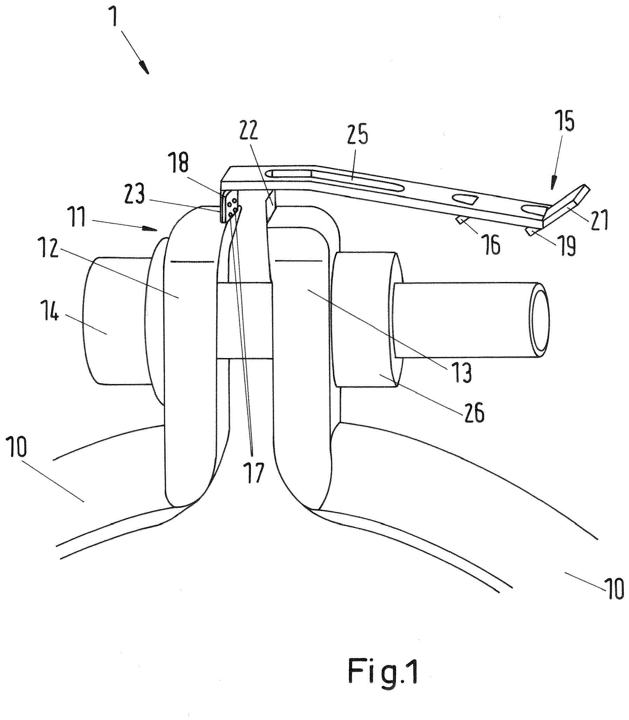

Fig. 1 zeigt in einer Detailansicht eine Spannschelle 1 mit einem Schellenband 10 und mit einem Schellenschloss 11, wobei das Schellenschloss 11 einen ersten Spannkopf 12 und einen zweiten Spannkopf 13 aufweist. Beide Spannköpfe 12 und 13 stehen sich gegenüber und können mittels eines Spannelements 14 in Form einer Spannschraube und einer Schraubenmutter 26 so miteinander verspannt werden, dass die beiden Spannköpfe 12 und 13 aufeinander zu gezogen werden. Dadurch wird ein Durchmesser der Spannschelle 1 verringert und diese somit in feste Anlage mit einem Flansch oder ähnlichem gebracht.

Der erste Spannkopf 12 weist eine Aufnahmefahne 18 auf, die sich am freien, oberen Ende des Spannkopfes 12 radial nach außen weg erstreckt. An der Aufnahmefahne 18 ist mittels eines Buckelschweißverfahrens eine Schweißfahne 23 des Clipelementes 15 angeschweißt. Das Clipelement 15 ist so ausgebildet, dass sich dieses über den gegenüberliegenden, zweiten Spannkopf 13 hinweg erstreckt. Am zweiten Spannkopf 13 ist ebenfalls eine fahnenartige Anformung am freien, oberen Ende vorhanden, welches eine Rastfahne 22 bildet. Die Rastfahne 22 kann mit Rastanformungen 16 und 19 des Clipelements 15 so zusammenwirken, dass die Spannköpfe 12 und 13 auch ohne den Einsatz des Spannelements 14 miteinander verbunden werden können, sodass eine Vorfixierung der Spannschelle 1 an einem Bauteil ermöglicht ist. Über das Clipelement 15 kann die Spannschelle also bereits geschlossen und in einem vorgespannten Zustand gehalten werden, bevor das Spannelement angezogen wird.

Die Schweißverbindung zwischen der Schweißfahne 23 des Clipelementes 15 und der Aufnahmefahne 18 umfasst Schweißbuckel 17, die vor dem Schweißvorgang beispielsweise im Clipelement 15 eingebracht sind und mit denen das Buckelschweißen als besondere Form des Widerstandsschweißverfahrens ausgeführt werden kann. Die gezeigten Schweißbuckel 17 sind aber nach einer Schweißung auch in der Aufnahmefahne 18 sichtbar, wie in der Ansicht gezeigt. Diese sind etwa gleich verteilt, beispielsweise paarweise, in der Aufnahmefahne 18 angedeutet. Die Schweißbuckel 17 bilden Schweißpunkte und sind als Schweißvorbereitung am Clipelement 15 ausgebildet. Sie befinden sich in der Ebene zwischen der Schweißfahne 23 des Clipelementes 15 und der Aufnahmefahne 18.

Das Clipelement 15 weist eine Fensteraussparung 25 auf, wodurch Gewicht einspart wird und wodurch die Biegesteifigkeit des Clipelements 15 herabgesetzt werden kann. Am freien Ende weist das Clipelement 15 eine Fahne 21 auf, an der das Clipelement 15 manuell hochgezogen werden kann, um beispielsweise die Rastanformung 16 oder 19 aus dem Eingriff mit der Rastfahne 22 des rechten, zweiten Spannkopfes 13 zu lösen.

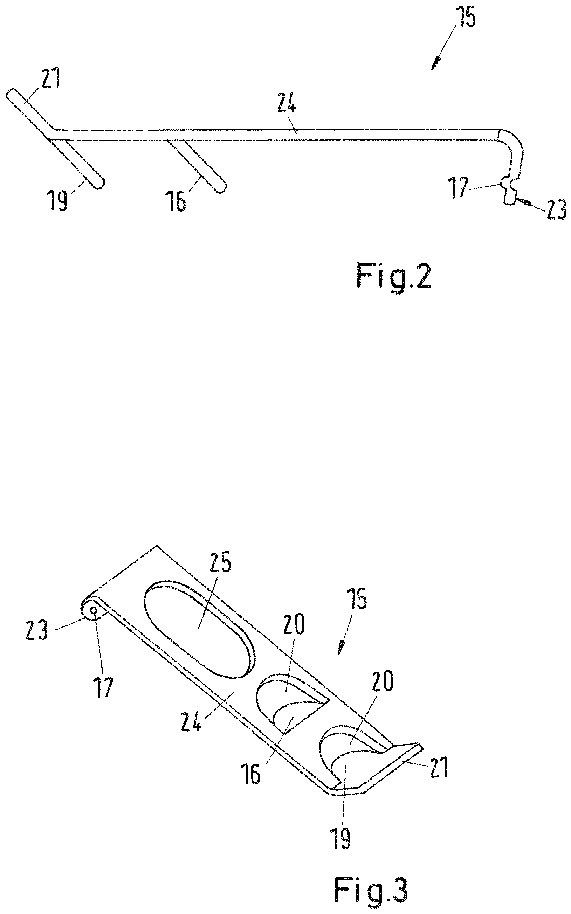

Fig. 2 zeigt eine Seitenansicht des Clipelements 15, wobei auf der rechten Seite eine Schweißfahne 23 am Clipelement 15 ausgebildet ist, die aus der ebenen Erstreckung des Federblechkörpers 24 abgewinkelt ist. An der Schweißfahne 23 ist die Ausprägung eines Schweißbuckels 17 angedeutet, der mit der Seitenfläche der Aufnahmefahne 18 am ersten Spannkopf 12 in Überdeckung gebracht wird. Aus dem Federblechkörper 24 sind die Rastanformungen 16 und 19 durch ein Ausklinken herausgebogen worden, wobei die Rastanformung 19 übergehend in die Fahne 21 ausgebildet ist. Die Rastanformungen 16 und 19 weisen einen Winkel von beispielsweise etwa 45° zur Erstreckungsebene des Federblechkörpers 24 auf. Dabei weisen die Rastanformungen 16 und 19 in Richtung zur Schweißfahne 23.

Fig. 3 zeigt das Clipelement 15 in einer perspektivischen Ansicht mit dem Grundkörper, der durch den Federblechkörper 24 gebildet ist. In der perspektivischen Ansicht ist die abgewinkelte Schweißfahne 23 mit dem eingebrachten Schweißbuckel 17 gezeigt. Auf der freien flächigen Erstreckung des Federblechkörpers 24 befindet sich die Fensteraussparung 25 zur Gewichtseinsparung und zur Anpassung der Federsteifigkeit des Clipelements 15. Weiterhin sind die Rastanformungen 16 und 19 in Form von Ausklinkungen 20 dargestellt, wobei die Rastanformung 19 in die Fahne 21 übergehend ausgebildet ist.

### Bezugszeichenliste

- 1: Spannschelle
- 10: Schellenband
- 11: Schellenschloss
- 12: Spannkopf
- 13: Spannkopf
- 14: Spannelement
- 15: Clipelement
- 16: Rastanformung
- 17: Schweißbuckel
- 18: Aufnahmefahne
- 19: Rastanformung
- 20: Ausklinkung
- 21: Fahne
- 22: Rastfahne
- 23: Schweißfahne
- 24: Federblechkörper
- 25: Fensteraussparung
- 26: Schraubenmutter

## Patentansprüche

1. Spannschelle (1) mit einem Schellenband (10), wobei das Schellenband (10) insbesondere einen V-förmigen Querschnitt aufweist, wobei das Schellenband (10) an einem ersten Ende einen ersten Spannkopf (12) und an einem zweiten Ende einen gegenüberliegenden zweiten Spannkopf (13) aufweist, wobei ein Spannelement (14) vorgesehen ist, mit dem die Spannköpfe (12, 13) miteinander verspannbar sind und wobei ein Clipelement (15) am ersten Spannkopf (12) angeordnet ist, das wenigstens eine Rastanformung (16) aufweist, an der der zweite Spannkopf (13) verrastbar ist, wobei das Clipelement (15) aus einem Federstahlband mittels eines Stanz-Biegeverfahrens hergestellt ist, wobei das Clipelement (15) am ersten Spannkopf (12) mittels eines Fügeverfahrens befestigt ist, **dadurch gekennzeichnet dass** das Fügeverfahren ein Buckelschweißverfahren ist.

2. Spannschelle (1) nach Anspruch 1, **dadurch gekennzeichnet, dass** am Clipelement (15) wenigstens ein Schweißbuckel (17) ausgebildet ist, mit dem das Buckelschweißen ausgeführt ist.

3. Spannschelle (1) nach Anspruch 2, **dadurch gekennzeichnet, dass** am Clipelement (15) ein und/oder zwei und/oder drei und /oder vier Schweißbuckel (17) ausgebildet sind.

4. Spannschelle (1) nach einem der Ansprüche 2 bis 3, **dadurch gekennzeichnet, dass** der erste Spannkopf (12) eine angeformte Aufnahmefahne (18) aufweist, die sich über ein freies Ende des Spannkopfes (12) hinweg erstreckt und an dem das Clipelement (15) mittels des Buckelschweißens aufgenommen ist.

5. Spannschelle (1) nach einem der vorgenannten Ansprüche, **dadurch gekennzeichnet, dass** das Clipelement (15) eine erste Rastanformung (16) und eine zweite Rastanformung (19) aufweist, wobei die beiden Rastanformungen (16, 19) jeweils mittels einer Ausklinkung (20) aus einem flächigen Bereich des Clipelementes (15) gebildet sind.

6. Spannschelle (1) nach einem der vorgenannten Ansprüche, **dadurch gekennzeichnet, dass** das Clipelement (15) am freien, der Buckelschweißverbindung gegenüberliegenden Ende eine aufgebogene Fahne (21) aufweist.

7. Spannschelle (1) nach Ansprüchen 5 und 6, **dadurch gekennzeichnet, dass** die aufgebogene Fahne (21) in einer gemeinsamen Biegeoperation mit der zweiten Rastanformung (16) ausgebildet ist und/oder dass sich die aufgebogene Fahne (21) mit der zweiten Rastanformung in einer gemeinsamen Ebene erstreckt, die unter einem Winkel zur Ebene des Clipelementes (15) angestellt ist.

8. Spannschelle (1) nach einem der vorgenannten Ansprüche, **dadurch gekennzeichnet, dass** der zweite Spannkopf (13) eine Rastfahne (22) aufweist, die zur Verrastung mit den Rastanformungen (16, 19) des Clipelementes (15) ausgebildet ist.

9. Spannschelle (1) nach einem der vorgenannten Ansprüche, **dadurch gekennzeichnet, dass** das Ende des Clipelementes (15) zur Ausbildung der Buckelschweißverbindung eine abgewinkelte Schweißfahne (23) aufweist, in der der wenigstens eine Schweißbuckel (17) eingebracht ist, und mit der die Buckelschweißverbindung hergestellt ist.

## Claims

1. Clamp (1) having a clamp band (10), wherein the clamp band (10) has in particular a V-shaped cross section, wherein the clamp band (10) has at a first end a first clamping head (12) and at a second end an opposite second clamping head (13), wherein a clamping element (14) is provided with which the clamping heads (12, 13) can be clamped together and wherein a clip element (15) is arranged on the first clamping head (12), which clip element has at least one latching formation (16) on which the second clamping head (13) can be latched,
wherein the clip element (15) is made of a spring steel band by means of a stamping and bending method, wherein the clip element (15) is fastened on the first clamping head (12) by means of a joining method, **characterised in that** the joining method is a projection welding method.

2. Clamp (1) according to claim 1, **characterised in that** at least one weld projection (17), with which the projection welding is carried out, is formed on the clip element (15).

3. Clamp (1) according to claim 2, **characterised in that** one and/or two and/or three and/or four weld projections (17) are formed on the clip element (15).

4. Clamp (1) according to any of claims 2 to 3, **characterised in that** the first clamping head (12) has an integrally formed receiving lug (18), which extends beyond a free end of the clamping head (12) and on which the clip element (15) is received using the projection welding.

5. Clamp (1) according to any of the preceding claims, **characterised in that** the clip element (15) has a first latching formation (16) and a second latching formation (19), wherein the two latching formations (16, 19) are each formed by a notch (20) out of a flat region of the clip element (15).

6. Clamp (1) according to any of the preceding claims, **characterised in that** the clip element (15) has a lug (21) bent upwards at the free end opposite the projection weld joint.

7. Clamp (1) according to claims 5 and 6, **characterised in that** the lug (21) bent upwards is formed in a common bending operation with the second latching formation (16) and/or **in that** the lug (21) bent upwards extends with the second latching formation in a common plane, which is set at an angle to the plane of the clip element (15).

8. Clamp (1) according to any of the preceding claims, **characterised in that** the second clamping head (13) has a latching lug (22), which is designed to latch with the latching formations (16, 19) of the clip element (15).

9. Clamp (1) according to any of the preceding claims, **characterised in that** the end of the clip element (15) has an angled welding lug (23) for forming the projection weld joint, in which angled welding lug the at least one weld projection (17) is introduced, and with which the projection weld joint is made.

## Revendications

1. Collier de serrage (1) avec une bande de collier (10), dans lequel la bande de collier (10) présente en particulier une section transversale en forme de V, dans lequel la bande de collier (10) présente au nouveau d'une première extrémité une première tête de serrage (12) et au niveau d'une seconde extrémité une seconde tête de serrage (13) opposée, dans lequel un élément de serrage (14) est prévu, avec lequel les têtes de serrage (12, 13) peuvent être serrées entre elles et dans lequel un élément de clip (15) est agencé au niveau de la première tête de serrage (12) qui présente au moins une formation d'encliquetage (16), au niveau de laquelle la seconde tête de serrage (13) peut être encliquetée,
dans lequel l'élément de clip (15) est fabriqué à partir d'un feuillard d'acier à ressort au moyen d'un procédé d'estampage et de pliage, dans lequel l'élément de clip (15) est fixé au niveau de la première tête de serrage (12) au moyen d'un procédé d'assemblage, **caractérisé en ce que** le procédé d'assemblage est un procédé de soudage par bossage.

2. Collier de serrage (1) selon la revendication 1, **caractérisé en ce qu'**au niveau de l'élément de clip (15) au moins un bossage de soudage (17) est réalisé, avec lequel le soudage par bossage est réalisé.

3. Collier de serrage (1) selon la revendication 2, **caractérisé en ce qu'**au niveau de l'élément de clip (15) un et/ou deux et/ou trois et/ou quatre bossages de soudage (17) sont réalisés.

4. Collier de serrage (1) selon l'une des revendications 2 à 3, **caractérisé en ce que** la première tête de serrage (12) présente un talon de réception formé (18) qui s'étend au-delà d'une extrémité libre de la tête des serrage (12) et au niveau duquel l'élément de clip (15) est reçu au moyen du soudage par bossage.

5. Collier de serrage (1) selon l'une quelconque des revendications précédentes, **caractérisé en ce que** l'élément de clip (15) présente une première formation d'encliquetage (16) et une seconde formation d'encliquetage (19), dans lequel les deux formations d'encliquetage (16, 19) sont formées respectivement au moyen d'une encoche (20) à partir d'une zone plate de l'élément de clip (15).

6. Collier de serrage (1) selon l'une quelconque des revendications précédentes, **caractérisé en ce que** l'élément de clip (15) présente au niveau de l'extrémité libre opposée à la liaison de soudage par bossage un talon arqué (21).

7. Collier de serrage (1) selon les revendications 5 et 6, **caractérisé en ce que** le talon arqué (21) est réalisé dans une opération de pliage commune avec la seconde formation d'encliquetage (16) et/ou que le talon arqué (21) s'étend avec la seconde formation d'encliquetage dans un plan commun qui est mis en place sous un angle par rapport au plan de l'élément de clip (15).

8. Collier de serrage (1) selon l'une quelconque des revendications précédentes, **caractérisé en ce que** la seconde tête de serrage (13) présente un talon d'encliquetage (22) qui est réalisé pour l'encliquetage avec les formations d'encliquetage (16, 19) de l'élément de clip (15).

9. Collier de serrage (1) selon l'une des revendications précédentes, **caractérisé en ce que** l'extrémité de l'élément de clip (15) présente pour la réalisation de la liaison de soudage par bossage un talon de soudage coudé (23) dans lequel l'au moins un bossage de soudage (17) est introduit, et avec lequel la liaison de soudage par bossage est établie.
